# EUROPÄISCHE PATENTSCHRIFT

(11) **EP 1 870 479 B1**
(45) Veröffentlichungstag und Bekanntmachung des Hinweises auf die Patenterteilung: **18.01.2012**
(21) Anmeldenummer: 07003091.1
(22) Anmeldetag: 14.02.2007
(51) Int. Cl.: C21B 3/06, C21B 7/14, C21B 3/10

(54) **Verfahren und Anlage zur kontinuierlichen Weiterverarbeitung schmelzflüssiger Hüttenschlacken**
Method and facility for continuous further processing of molten slag
Procédé et installation destinés au traitement en continu de scories de fusion de fonderie

(30) Priorität: 23.02.2006 AT 2962006
(43) Veröffentlichungstag der Anmeldung: 26.12.2007
(73) Patentinhaber: Hulek, Dipl.-Ing., Anton, A-4040 Linz (AT)
(72) Erfinder: Hulek, Dipl.-Ing., Anton, A-4040 Linz (AT)
(74) Vertreter: Hübscher, Helmut

(56) Entgegenhaltungen:
- EP-A- 1 083 236
- WO-A-97/43455
- DE-A1- 3 416 396
- JP-A- 59 113 105

## Beschreibung

Die Erfindung bezieht sich auf ein Verfahren und eine Anlage zur unmittelbaren Weiterverarbeitung schmelzflüssiger Hüttenschlacken,insbesondere Hochofen- und Stahlwerksschlacken. Dabei wird die stossförmig anfallende Schlacke vorzugsweise direkt mit üblichen,zumeist schon bestehenden Rinnen in ein sogenanntes "Speicher-,Regel- und Sedimentationsgefäss" (SRS) gefüllt und von diesem geregelt, vollkontinuierlich weitergeleitet.

Die heute übliche Weiterverarbeitung der Hüttenschlacken erfolgt i.a. in Nebenbetrieben nach einem Zwischentransport der noch flüssigen Schlacke.

Moderne Nassgranulationsanlagen für Hochofenschlacke arbeiten häufig auch ohne

Zwischentransport aber diskontinuierlich und müssen deshalb auf den maximalen Ausstoss der Schlacke je Zeiteinheit ausgelegt sein.

WO97/43455 offenbart eine Vorrichtung zur Durchführung des kontinuierlichen Beschickens einer Granulieranlage wobei, ein Überlauf als Austrittsöffnung in einem horizontalen Abstand von der Füllöffnung angeordnet ist und eine Steuereinrichtung, in Abhängigkeit von der Überlaufmenge der Schlacke den Schwenkantrieb für das Speichergefäss steuert.

Hochofen- und Stahlwerksschlacke werden mit sehr unterschiedlichen Durchsätzen, dem jeweiligen Ausstoss entsprechend, ,mit Wasser gekühlt. Die Investitions- und Betriebskosten sind hoch. Der grosse hochwertige Wärmeinhalt der Flüssigschlacken wird mit viel Wasser vernichtet und die Umwelt belastet.

Der Erfindung liegt die Aufgabe zugrunde,die Nachteile der bestehenden Weiterverarbeitung der Hüttenschlacken zu vermeiden. Sie löst diese Aufgabe vor allem dadurch,dass die stossförmig,sehr ungleich anfallende Flüssigschlacke in unmittelbarer Nähe des Anfallortes zunächst in ein "Speicher-,Regel- und Sedimentationsgefäss" geleitet wird. Der stossförmige Schlackenanfall wird in einen vollkontiuierlichen Fluss , auch während der Nachfüllung, umgewandelt. Es geht praktisch keine Wärme verloren. Das Ausbringen ist nahe 100%,der Wasserverbrauch fast null, wenn anschliessend eine Trockenkühlung folgt. Durch eine mögliche vollkontinuierliche Trockenkühlung kann der grosse Wärmeinhalt der Flüssigschlacke weitgehend rückgewonnen und verstromt werden. Die Investitions- und Betriebskosten sind sehr günstig.

### HOCHOFENSCHLACKE

Hochofenschlacke hat unter den Hüttenschlacken die grösste Bedeutung. Sie wird noch immer ausschliesslich durch Nassgranulation zu nassem Hüttensand für die Zementindustrie weiterverarbeitet.

Nach dem vorgeschlagenem Verfahren des Anspruchs 1 wird die schmelzflüssige Schlacke über schon bestehende Rinnen in das "SRS- Gefäss" geleitet. Dieses hat eine längliche Form und einen horizontalen Verlauf,wobei das untere Ende in einer horizontalen Kipp- bzw. Drehachse gelagert ist. Am oberen Ende befindet sich eine relativ grosse Einfüllöffnung. Die Schlacke strömt zur mit horizontalem Abstand vorgesehenen Überlauföffnung, aus der sie vollkontinuierlich geregelt in die Nachfolgeanlage ,zumeist eine Trockenkühlanlage, fliesst.

Auf diese Weise bleibt die Schlacke immer in Bewegung.

Das Volumen des SRS-Gefässes entspricht dem stossförmigen Schlackenanfall unter Berücksichtigung der gleichzeitig erfolgenden Entleerung und überbrückt die Wartezeiten bis zum nächsten Abstich.

Die Kipp- oder Drehbewegung des SRS-Gefässes um eine im Bereich des Überlaufes verlaufende Kippachse erfolgt durch einen Kettentrieb oder einen Hydraulikzylinder über eine Giessspiegel- oder Mengenregelung.

Die am Boden des SRS-Gefässes angesammelte Metallschmelze wird in grossen zeitlichen Abständen durch eine, im Gefässboden befindliche Abstichöffnung zun Auslauf gebracht.

Das SRS-Gefäss ist sehr gut wärmeisoliert und benötigt infolge des Wärmeüberschusses der einströmenden Schlacke i.a. kein Nacherwärmung. Zwecks Vermeidung von Verkrustungen und "Bärenbildungen" an der Überlauföffnung ragt der Überlaufbereich des Gefässes in eine beheizte Vorkammer, in der sich auch der Verteiler für eine nachfolgende Trockengranulation befindet.

Die Innenseite des SRS-Gefässes ist für HO-Schlacke feuerfest ausgemauert. Sie wird durch eine sich selbst bildende dünne Schale aus HO-Schlacke zusätzlich geschützt und isoliert. Das ganze SRS-Gefäss ist durch einen mittels Fasermatten gut isolierten,leicht abnehmbaren Deckel abgedeckt,um das Aumauern zu erleichtern, die Strahlungsverluste zu minimieren und zu verhindern, dass sich die Schlacke,, eindeckelt".

Als Trockenkühlverfahren kommen alle leistungsfähigen kontinuierlichen Verfahren in

Betracht.

### STAHLWERKSSCHLACKE

Das vorgeschlagene Verfahren funktioniert bei der Weiterverarbeitung von LD- und E-Ofenschlacke sehr ähnlich wie bei der Hochofenschlacke. Da diese Schlacken derzeit in Schlackenpfannen entleert werden,bestehen noch keine Rinnen für die Schlacke.

Die Form und Anordnung des SRS-Gefässes ist unter Berücksichtigung einer möglichst kurzen Rinnenverbindung jeweils konstruktiv anzupassen. Die FF-Ausmauerung hat den Erfordernissen der Stahlwerksschlacken zu entsprechen.

Für die nachfolgende Trockenkühlung kommen dieselben Verfahren wie bei der HO-Schlacke in Betracht.

### ZEICHNUNGEN

In den Zeichnungen ist der Erfindungsgegenstand beispielsweise dargestellt.

Es zeigen:

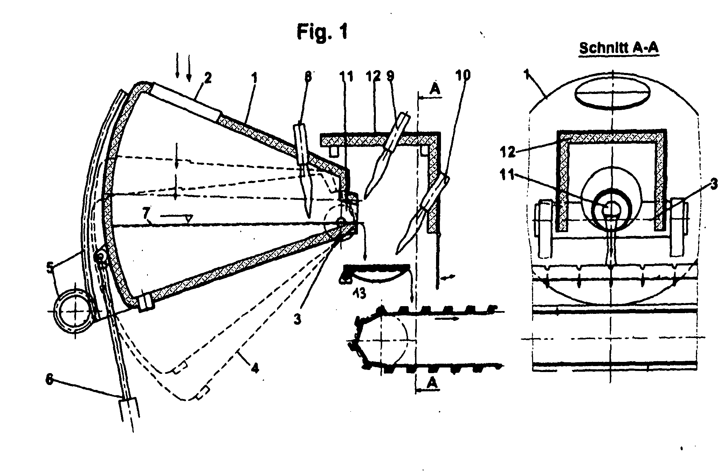

Fig 1. Die erfindungsgemässe Speicher-Regel-und Sedimentationsanlage (SRS), zum Teil in Querschnittsdarstellung,fiir Hochofenschlacke mit Giessspiegelregelung. Das SRS-Gefäss (1) hat im Wesentlichen die Form eines liegenden Kegels,an dessem reduzierten unteren Ende sich eine querliegende,horizontale Achse (3) befindet, um die der Kegel mittels Hydraulikzylinder (6) oder Kettentrieb (5) gekippt werden kann. Das untere Ende,das die Überlauföffnung (11) enthält, behält dabei seine Höhe bei.
   Die schmelzflüssige Schlacke wird mittels Giessspiegelregelung (7) und Antrieb (5 oder 6) durch Kippen des SRS-Gefässes soweit angehoben, dass der Giessspiegel (7) die Überlauföffnung (11) erreicht und die Schlacke in der gewünschten Menge/Zeiteinheit kontinuierlich ausfliesst. Die Einfüllung der Schlacke erfolgt stossartig über die grosse Füllöffnung (2) am oberen Ende des SRS-Gefässes. Damit der Giessspiegel (7) in gleicher Höhe bleibt, sinkt das SRS-Gefäss (1) entsprechend ab. Die unterste Position (4) wird nur erreicht,wenn in extremen Ausnahmefällen der Überlaufbetrieb (11) gestört ist. In diesem Falle ist ein "Notbetrieb" in Form einer Umlenkung des Schlackenstromes noch vor dem Einlauf in das SRS-Gefäss (1) vorgesehen.
   Das SRS-Gefäss ist sehr gut wärmeisoliert und ausgemauert,sodass im Normalbetrieb keine Nacherwärmung nötig ist. Die Schlacke bildet ausserdem eine dünne Schale,welche die Ausmauerung vor chemischem Angriff schützt und zugleich zusätzlich isoliert. Für die Vorerwärmung des SRS-Gefässes (1) ist ein Brennerbetrieb (8) vorgesehen. Die Überlauföffnung (11) mündet in eine Vorkammer (12), um so die überlaufende Schlacke vor der kalten Atmospäre und Abstrahlung zu schützen. Dadurch bleibt die Öffnung stets sauber bzw. frei von "Bärenbildung". Zur zusätzlichen Sicherheit ist auch hier ein Brenner (9) situiert.
   Bei einer anschliessenden Trockengranulation wird die Schlacke in einen Verteiler (13) geleitet,der sie auf Umlaufförderer mit grosser Breite weiterleitet, wo sie i.a. glasig erstarrt.
   Ab der Trockengranulieranlage folgt die systematische Weiterkühlung der Schlacke bei gleichzeitiger Wärmerückgewinnung. Grosse Wassermengen werden eingespart.

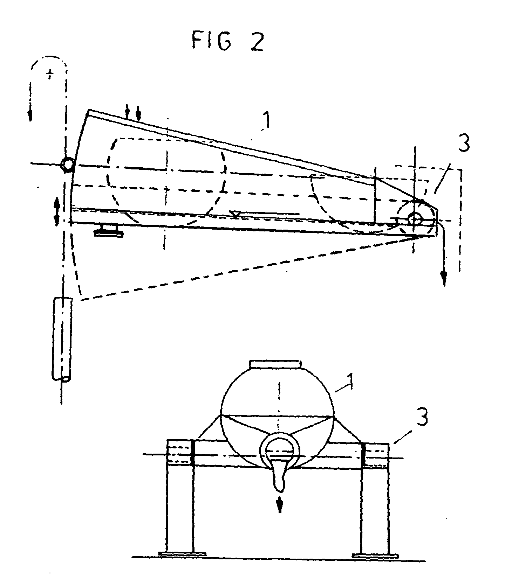

FIG 2 : Die erfindungsgemässe SRS-Anlage in einer Variante des SRS-Gefässes. Die Betriebsweise ist mit jener der Fig 1 gleich.

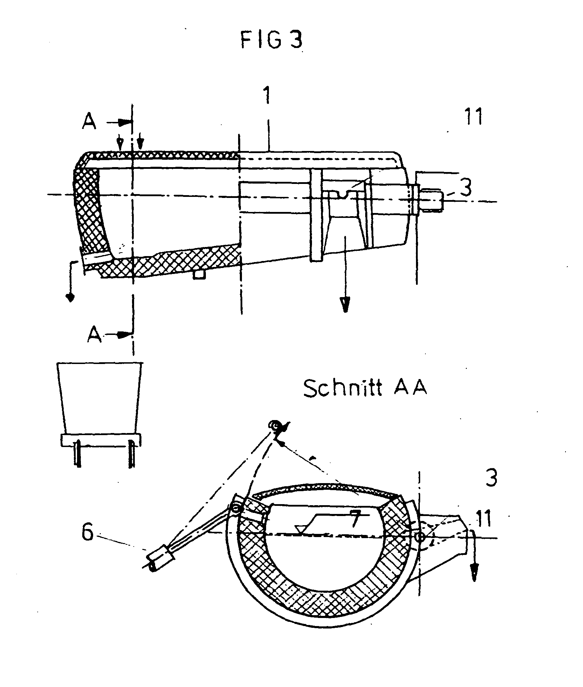

FIG 3: Die erfindungsgemässe SRS-Anlage in einer 3.Variante des SRS-Gefässes (1). Es hat hier die Form eines Kegelstumpfes. Die Regelung erfolgt wieder über den Giessspiegel. Die Überlauföffnung (11) befindet sich an der Längsseite des SRS -Gefässes. Die Kippachse (3) liegt wieder in Höhe der Überlauföffnung. Sie verläuft parallel zur Erzeugenden des Kegelstumpfes.

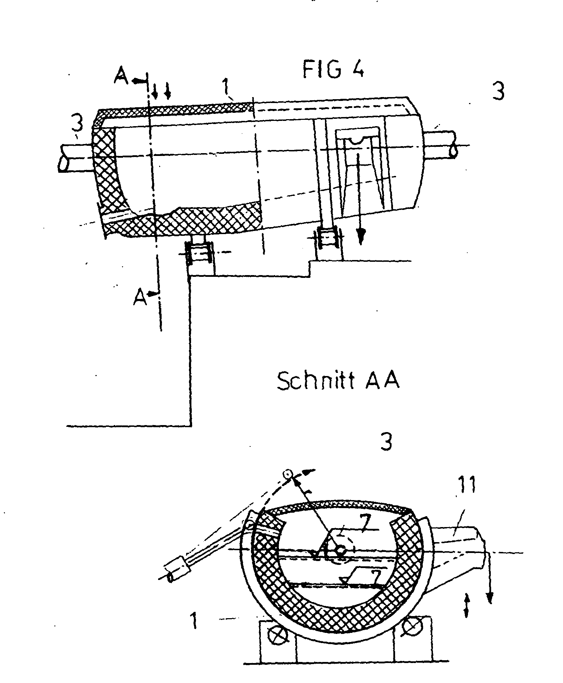

FIG 4 : Eine (nicht Teil der Erfindung) SRS-Anlage mit einer Gefässform (1) ähnlich Fig 3. Die Antriebsregelung erfolgt jedoch nicht über den Giessspiegel (7), sondern über einen Mengenregler,der die nötigen Impulse an den Antrieb (5 oder 6) gibt.Der Kegelstumpf bleibt während der Kipp- (Dreh-)-Bewegung zentrisch. Die Lagerung der Trommel erfolgt über kreisbogenförmige Schienen am Kegelumfang. Die Höhe der Überlauföffnung (11) und des Giessspiegels (7) verändert sich während des Betriebes.

Der Betrieb mit Stahlwerksschlacke gleicht im Wesentlichen dem beschriebenen Betrieb mit Hochofenschlacke. Da die Schlackenmengen aber viel kleiner sind,genügt eine viel kleinere SRS.Anlage.

Die Schlackenzufuhr ist den Verhältnissen anzupassen. Der Vorteil des

SRS-Betriebes bleibt erhalten, da die Schlacke kontinuierlich weitergeleitet und trocken gekühlt werden kann.

## Patentansprüche

1. Verfahren zum kontinuierlichen Beschicken einer Granulieranlage mit flüssiger Hüttenschlacke, wobei die stoßweise anfallende Schlacke durch eine Füllöffnung (2) in ein Speichergefäß (1) eingebracht, mit Hilfe von Brennern (8) warmgehalten und aus dem Speichergefäß (1) kontinuierlich abgegeben wird, **dadurch gekennzeichnet, dass** die Schlacke über einen mit horizontalem Abstand vom Bereich der Füllöffnung (2) vorgesehenen Überlauf (11) unter Ausbildung einer Schlackenströmung entlang eines Strömungsweges vom Bereich der Füllöffnung (2) zum Überlauf (11) in Bewegung gehalten und durch ein Kippen des Speichergefäßes (1) um eine im Bereich des Überlaufes (11) verlaufende Kippachse (3) kontinuierlich ausgegossen wird.

2. Verfahren nach Anspruch 1, **dadurch gekennzeichnet, dass** die Schlacke entlang eines sich in seiner Tiefe gegen den Überlauf (11) verjüngenden Strömungsweges zum Überlauf (11) strömt.

3. Verfahren nach Anspruch 1, **dadurch gekennzeichnet, dass** die Schlacke in einer dem Überlauf (11) vorgelagerten Vorkammer (12) durch Heizbrenner (9, 10) gegen eine vorzeitige Abkühlung abgeschirmt wird.

4. Vorrichtung zur Durchführung des Verfahrens nach Anspruch 1 oder 2 mit einem eine Füllöffnung (2) und eine Austrittsöffnung aufweisenden Speichergefäß (1) für die Schlacke und mit einer Steuereinrichtung für die ausfließende Schlacke, **dadurch gekennzeichnet, dass** das Speichergefäß (1) wenigstens einen in einem horizontalen Abstand von der Füllöffnung (2) angeordneten Überlauf (11) als Austrittsöffnung für die Schlacke aufweist und um eine horizontale, im Bereich des Überlaufes (11) verlaufende Kippachse (3) verschwenkbar ist und dass die Steuereinrichtung einen in Abhängigkeit von der Überlaufmenge der Schlacke und dem Spiegel (7) des Schlackenbades im Speichergefäß (1) ansteuerbaren Schwenkantrieb (5, 6) für das Speichergefäß (1) umfasst.

5. Vorrichtung nach Anspruch 4, **dadurch gekennzeichnet, dass** die Tiefe des Speichergefäßes (1) gegen den Überlauf abnimmt.

6. Vorrichtung nach Anspruch 4, **dadurch gekennzeichnet, dass** das Speichergefäß (1) die Form eines Kegelstumpfs aufweist, dessen Mittellinie mit der Mittellinie der Schwenkachse ident ist.

## Claims

1. Method of continuously feeding a granulation plant with liquid mill slag, wherein the intermittently occurring slag is introduced through a fill opening (2) into a storage vessel (1), is kept warm with the aid of burners (8) and is continuously discharged from the storage vessel (1), **characterised in that** the slag is kept in motion over an overflow (11), which is provided at a horizontal spaced interval from the region of the fill opening (2), with the formation of a slag flow along a flow path from the region of the fill opening (2) to the overflow (11), and is continuously poured out by tilting the storage vessel (1) about a tilting axis (3) extending in the region of the overflow (11).

2. Method as claimed in claim 1, **characterised in that** the slag flows to the overflow (11) along a flow path which tapers in depth towards the overflow (11).

3. Method as claimed in claim 1, **characterised in that** the slag is shielded against premature cooling by heating burners (9, 10) in an antechamber (12) located upstream of the overflow (11).

4. Apparatus for carrying out the method as claimed in claim 1 or 2, having a storage vessel (1) for the slag, which storage vessel comprises a fill opening (2) and an outlet opening, and having a control device for slag flowing out, **characterised in that** the storage vessel (1) comprises at least one overflow (11), which is disposed at a horizontal spaced interval from the fill opening (2), as an outlet opening for the slag and can be pivoted about a horizontal tilting axis (3) extending in the region of the overflow (11), and **in that** the control device comprises a pivot drive (5, 6) for the storage vessel (1), which pivot drive can be controlled in dependence upon the overflow quantity of slag and upon the level (7) of the slag bath in the storage vessel (1).

5. Apparatus as claimed in claim 4, **characterised in that** the depth of the storage vessel (1) decreases towards the overflow.

6. Apparatus as claimed in claim 4, **characterised in that** the storage vessel (1) is in the form of a truncated cone, the centre line of which is identical to the centre line of the pivot axis.

## Revendications

1. Procédé destiné à l'alimentation en continu d'une installation de granulation en scorie de fonderie liquide, la scorie arrivant par intermittence étant chargée par une ouverture de remplissage (2) dans un récipient d'accumulation (1), conservée au chaud à l'aide de brûleurs (8) et éliminée en continu du récipient d'accumulation (1), **caractérisé en ce que** la scorie est maintenue en mouvement par le biais d'un déversoir (11) prévu écarté horizontalement de la zone de l'ouverture de remplissage (2) par formation d'un courant de scories le long d'un parcours d'écoulement de la zone de l'ouverture de remplissage (2) vers le déversoir (11) et est déversée en continu par un basculement du récipient d'accumulation (1) autour d'un axe de basculement (3) situé dans la zone du déversoir (11).

2. Procédé selon la revendication 1, **caractérisé en ce que** la scorie chemine le long d'un parcours d'écoulement se rétrécissant dans sa profondeur aux alentours du déversoir (11) vers le déversoir (11).

3. Procédé selon la revendication 1, **caractérisé en ce que** la scorie est protégée de tout refroidissement prématuré dans une préchambre (12) placée en amont du déversoir (11) par des brûleurs de chauffage (9, 10).

4. Dispositif destiné à la réalisation du procédé selon la revendication 1 ou 2 avec un réservoir d'accumulation (1), présentant une ouverture de remplissage (2) et une ouverture de sortie, pour la scorie et avec un dispositif de commande pour la scorie s'écoulant, **caractérisé en ce que** le réservoir d'accumulation (1) présente au moins un déversoir (11) disposé écarté horizontalement de l'ouverture de remplissage (2), en tant qu'ouverture de sortie pour la scorie, et qui peut pivoter autour d'un axe de basculement (3) horizontal situé dans la zone du déversoir (11) et **en ce que** le dispositif de commande comprend un dispositif d'entraînement de pivotement (5, 6) pouvant être commandé en fonction de la quantité déversée de scories et du niveau (7) du bain de scories dans le réservoir d'accumulation (1).

5. Dispositif selon la revendication 4, **caractérisé en ce que** la profondeur du réservoir d'accumulation (1) diminue aux alentours du déversoir.

6. Dispositif selon la revendication 4, **caractérisé en ce que** le réservoir d'accumulation (1) présente la forme d'un tronc de cône, dont la ligne médiane est identique à la ligne médiane de l'axe de pivotement.
